# EUROPEAN PATENT APPLICATION

(11) **EP 3 715 757 A1**
(43) Date of publication of application: **30.09.2020**
(21) Application number: 19382223.6
(22) Date of filing: 28.03.2019
(51) Int. Cl.: F27B 3/08, F27D 11/08, H05B 7/085, H05B 7/14

(54) **ELECTRODE ASSEMBLY**

(71) Applicant: Universidade de Santiago de Compostela, 15782 Santiago de Compostela (ES)
(72) Inventor: BULLON CAMARASA, Javier, E-15782 Santiago de Compostela (ES); BERMÚDEZ DE CASTRO LÓPEZ-VARELA, Alfredo, E-15782 Santiago de Compostela (ES); SALGADO RODRÍGUEZ, María del Pilar, E-15782 Santiago de Compostela (ES); GUITIÁN RIVERA, Francisco, E-15782 Santiago de Compostela (ES)
(74) Representative: Tribalyte Ideas

(57) **Abstract**

The invention provides an electrode assembly comprising a first electrode (1), a second electrode (2) and a main connecting element (3). A first portion of the main connecting element is introduced in the first hole (14) of the first electrode (1) and a second portion of the main connecting element is introduced in the first hole (24) of the second electrode (2), providing a reaction force in the electrode direction (d) so as to keep the first electrode (1) joined to the second electrode (2). The main connecting element (3) is made of a material with a tensile strength of at least 6 times the tensile strength of the first and second electrode, and has a cross section surface which is at least 5 times lower the cross section surface of the first and second electrodes. In particular, a carbon fibre composite material with graphitized carbon resin is used in this main connecting element (3), this element being only in charge of the mechanical joint between electrodes, without any electric role in this joint.

## Description

### TECHNICAL FIELD

This invention is related to the field of electrodes used in electric arc furnaces, and more particularly to the joint between two adjacent electrodes.

### STATE OF THE ART

Electrodes are one of the most important elements in electric arc furnaces. They are responsible for transmitting the electric current from the contact plates, where they are introduced, to the area of the electric arc in the lower part of the furnace. By the heat released with this electric arc, a high amount of heat is obtained, so that scrap may be melted, oxides may be reduced to the corresponding metal, etc.

Said electrodes are usually made of carbon, due to its conductive properties, and the ability to maintain its characteristics at high temperatures and to be consumed by the electric arc in the lower zone of the oven without contaminating the product to be heated. The electrodes are added successively in the upper area of the column and are consumed in the lower area continuously throughout the manufacturing process.

Due to this continuous consumption and the necessity to use of the entire electrode, it is necessary to provide a suitable joint between electrodes. A nipple is a carbon electrode, with smaller diameter and higher quality that provides the mechanical and electrical joint between two subsequent electrodes. While a normal graphite electrode has a tensile strength around 10 MPa, the nipple is closer to 18 MPa. The external surface is machined with a thread that allows connecting the lower electrode with the upper one. A careful design and high-quality materials make it a more expensive product than normal graphite.

An alternative solution for this joint is therefore sought.

### SUMMARY OF THE INVENTION

The invention provides an alternative solution for providing a joint between two electrodes by an electrode assembly according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides an electrode assembly comprising
a first electrode extended along an electrode direction, the first electrode comprising a first end and a second end and further comprising a first hole;
a second electrode extended along the electrode direction, the second electrode comprising a first end and a second end, wherein the second end of the first electrode is in contact with the first end of the second electrode, and where the second electrode further comprises a first hole;
a main connecting element, wherein a first portion of the main connecting element is introduced in the first hole of the first electrode and a second portion of the main connecting element is introduced in the first hole of the second electrode, providing a reaction force in the electrode direction so as to keep the first electrode joined to the second electrode;
wherein the main connecting element is made of a material with a tensile strength of at least 6 times the tensile strength of the first and second electrode;
wherein the main connecting element has a cross section surface which is at least 5 times lower the cross section surface of the first and second electrodes.

In this electrode assembly, mechanical joint and electric joint are solved by different elements of the assembly: while electric joint is ensured by the contact of the second end of the first electrode and the first end of the second electrode, mechanical joint is ensured by the coupling of the main connecting element between both electrodes, due to the reaction force provided in the electrode direction. Thus, the weight of the second electrode is compensated by this reaction force, provided by the interaction between the main connecting element and the electrodes.

Both the electrodes and the main connecting element are elongated elements. The cross section surface of each one will be measured according to a cross section which is perpendicular to the respective elongation direction.

In some particular embodiments, the electrode assembly further comprises a conductive resin, such as pitch, between the second end of the first electrode and the first end of the second electrode.

This conductive resin ensures the electric connection between electrodes so that the assembly is considered as a single electrode by the current. Pitch is a good example of such a resin, which is able to maintain its properties at high temperature.

In some particular embodiments, the electrode assembly further comprises a conductive resin, such as pitch, between the main connecting element and the first hole of the first and/or second electrode.

This conductive resin ensures the electric connection between each electrode and the main connecting element so that the assembly is considered as a single part by the current, which will be conveyed mostly over the surface of the electrode, due to skin effect. Pitch is a good example of such a resin, which is able to maintain its properties at high temperature.

In some particular embodiments, the conductive resin has undergone a thermal and vacuum process. This provides better properties to the resin.

In some particular embodiments, the main connecting element has a thermal expansion coefficient between 80% and 99% of the thermal expansion coefficient of the first and/or second electrode.

This makes that when the temperature grows higher, the two electrodes are pressed against each other, due to the thermal expansion.

In some particular embodiments, the connecting element contains carbon fibres and a carbon resin and has been manufactured by graphitizing the carbon resin around the carbon fibres. As a consequence, a very hard material is obtained, which is usually called CFC C/C (carbon fibre composite with carbon fibres and carbon resin), with mechanical properties which are maintained even at high temperatures. This graphitizing process confers the main connecting element good mechanical properties, which are kept even at high temperatures.

In some particular embodiments, the second electrode comprises a cavity and the first electrode comprises a protrusion which matches the cavity of the second electrode.

This solution is used when the electric contact surface provided by a simple approaching of flat ends is not enough, and the contact surface needs to be increased.

In some particular embodiments, the first hole of the first electrode is performed in the protrusion and the first hole of the second electrode is performed in the cavity.

As this joint has usually a circular symmetry, this is the easiest design, with the first holes in the central axis of the electrode, and the protrusion and cavity also around this axis.

In some particular embodiments, the main connecting element is threaded and the first hole of the first electrode and the first hole of the second electrode are also threaded so as to fit the thread of the main connecting element, thus providing a reaction force in the electrode direction so as to keep the first electrode joined to the second electrode.

A threaded joint is an option to achieve the reaction force in the electrode direction. However, this joint is different from the nipple one, since the main connecting element is only in charge of the mechanical joint, and it is usually made of CFC C/C, and hence it does not need any special electric properties.

In some particular embodiments, the first hole of the first electrode is located in the protrusion, and the first hole of the second electrode goes through the cavity, so that the main connecting element, the first hole of the first electrode and the first hole of the second electrode are arranged in a direction which is substantially perpendicular to the electrode direction.

This embodiment foresees the main connecting element crossing the electrodes in a direction which is perpendicular to the electrode direction. As a consequence, the reaction force is provided by the presence of this perpendicularly arranged element, which crosses the first hole of the first electrode and the first hole of the second electrode.

In some particular embodiments,
the first electrode further comprises a second hole which extends in a direction different from the electrode direction and crosses the first hole;
the second electrode further comprises a second hole which extends in a direction different from the electrode direction and crosses the first hole;
the main connecting element comprises a first through hole and a second through hole;
the electrode assembly further comprises a first bolt introduced in the second hole of the first electrode and passing through the first through hole of the main connecting element;
the electrode assembly further comprises a second bolt introduced in the second hole of the second electrode and passing through the second through hole of the main connecting element.

These embodiment are a little more complex than the other ones, but provide a better coupling between the electrodes. One bolt is introduced in each electrode, crossing the first hole until arriving at the main connection element, also crossing it.

In some particular embodiments, the second holes of the first and second electrodes extend in a direction perpendicular to the electrode direction.

When this direction is perpendicular to the electrode direction, the support is maximum.

In some particular embodiments, the first bolt and/or the second bolt are conical.

A conical shape gives the bolts easiness when being introduced in the holes, and the ability of increasing the tightening force between the first and second electrode.

### BRIEF LIST OF DRAWINGS AND REFERENCE NUMBERS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a typical joint between electrodes known in the state of the art.
Figures 2a and 2b show an exploded view and an assembled view of a first embodiment of an electrode assembly according to the invention.
Figures 3a and 3b show an exploded view and an assembled view of a second embodiment of an electrode assembly according to the invention.
Figures 4a and 4b show an exploded view and an assembled view of a third embodiment of an electrode assembly according to the invention.

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included.

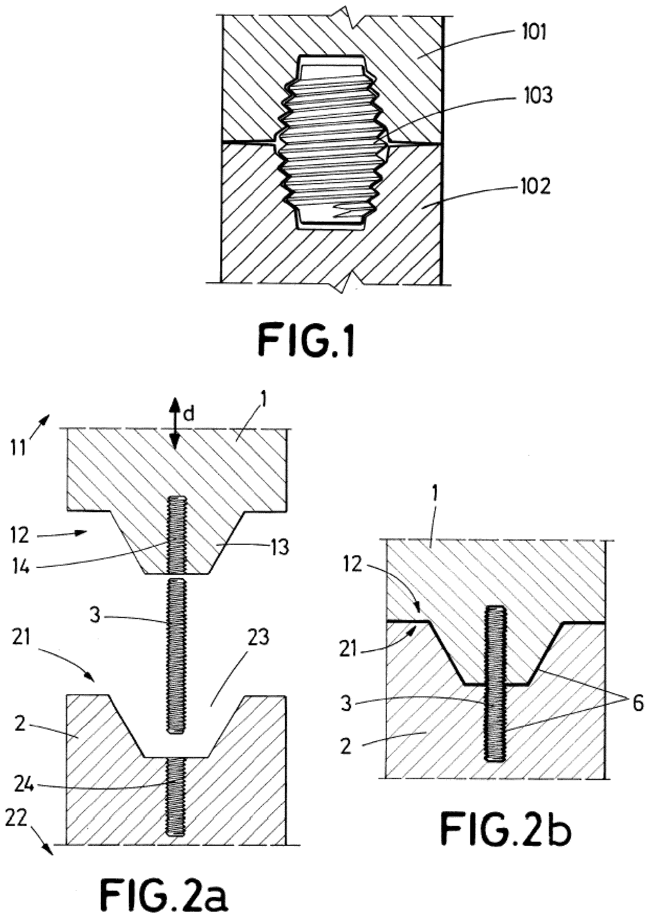

Figure 1 shows a typical joint between electrodes known in the state of the art.

There is a first electrode 101 and a second electrode 102. There is also a threaded nipple 103 which is threaded both to the first electrode 101 and to the second electrode 102. The shape of this nipple 103 is carefully chosen, since both the mechanical and the electric connection rely on this element.

Figure 2a shows an exploded view of an electrode assembly according to the invention. This assembly comprises
a first electrode 1 extended along an electrode direction d, with a first end 11 and a second end 12,
a second electrode 2 extended along the electrode direction d, with a first end 21 and a second end 22; and
a main connecting element 3.

The second electrode 2 comprises a cavity 23 and the first electrode 1 comprises a protrusion 13 which matches the cavity 23 of the second electrode 2. In this embodiment, the first electrode 1 comprises a first hole 14 which is performed in the protrusion 13 in a direction parallel to the electrode direction d. The second electrode 2 comprises in turn a first hole 24 which is performed in the cavity 23 in a direction parallel to the electrode direction d. Both first holes are arranged to be aligned when the two electrodes 1, 2 are put together. In this embodiment, the main connecting element 3 is threaded. The first hole 13 of the first electrode 1 and the first hole 23 of the second electrode 2 are also threaded so as to fit the thread of the main connecting element 3.

Figure 2b shows an assembled view of the electrode assembly of figure 2a.

The second end 12 of the first electrode 1 is in contact with the first end 21 of the second electrode 2. This contact is provided by the tightening of the main connecting element 3. The main connecting element 3 is threaded to the first holes of the first and second electrodes 1, 2. The main connecting element 3 is threaded to the first hole of the first electrode 1 and to the first hole of the second electrode 2, thus providing a reaction force in the electrode direction d so as to keep the first electrode 1 joined to the second electrode 2. As a consequence, the two electrodes 1, 2 are coupled mechanically with an element which does not require any specific electric properties.

There is some pitch 6 located between the second end 12 of the first electrode 1 and the first end 21 of the second electrode 2. There is also pitch 6 between the main connecting element 3 and the first hole of the first electrode 1 and between the main connecting element 3 and the first hole of the second electrode 2. This pitch ensures good electric contact along all the joint, and in some cases, it may have undergone a thermal process, by resistance heating and vacuum.

The main connecting element 3 has a composite structure which contains carbon fibres and a carbon resin and has been manufactured by graphitizing the carbon resin around the carbon fibres. As a consequence, a very hard material is obtained, called CFC C/C, with mechanical properties which are maintained even at high temperatures. The connecting element 3 has a thermal expansion coefficient between 80% and 99% of the thermal expansion coefficient of the first and/or second electrode, so that when the assembly is heated, the first and second electrodes are even closer.

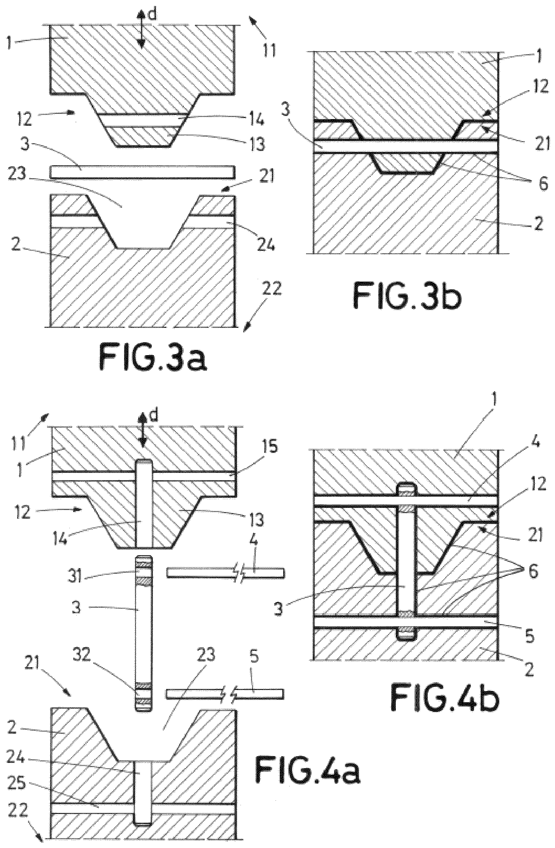

Figure 3a shows an exploded view of a second embodiment of an electrode assembly according to the invention. This assembly comprises
a first electrode 1 extended along an electrode direction d, with a first end 11 and a second end 12,
a second electrode 2 extended along the electrode direction d, with a first end 21 and a second end 22; and
a main connecting element 3.

The second electrode 2 comprises a cavity 23 and the first electrode 1 comprises a protrusion 13 which matches the cavity 23 of the second electrode 2. In this embodiment, the first electrode 1 comprises a first hole 14 which is performed in the protrusion 13, but perpendicular to the electrode direction d. The second electrode 2 comprises in turn a first hole 24 which is performed in the cavity 23, also in a direction which is perpendicular to the electrode direction d. The two first holes 14, 24 are arranged so as to be aligned when the first and second electrodes 1, 2 are put together.

Figure 3b shows an assembled view of the electrode assembly of figure 3a.

The second end 12 of the first electrode 1 is in contact with the first end 21 of the second electrode 2. This contact is provided by the tightening of the main connecting element 3. The main connecting element 3 crosses the first holes of the first and second electrodes 1, 2, thus providing a reaction force in the electrode direction d so as to keep the first electrode 1 joined to the second electrode 2. As a consequence, the two electrodes 1, 2 are coupled mechanically with an element which does not require any specific electric properties.

In this case, there is also some pitch 6 located between the second end 12 of the first electrode 1 and the first end 21 of the second electrode 2. There is also pitch 6 between the main connecting element 3 and the first hole of the first electrode 1 and between the main connecting element 3 and the first hole of the second electrode 2. This pitch ensures good electric contact along all the joint, and in some cases, it may have undergone a thermal process, by resistance heating and vacuum.

The main connecting element 3 has a composite structure which contains carbon fibres and a carbon resin and has been manufactured by graphitizing the carbon resin around the carbon fibres. As a consequence, a very hard material is obtained, called CFC C/C, with mechanical properties which are maintained even at high temperatures. The connecting element 3 has a thermal expansion coefficient between 80% and 99% of the thermal expansion coefficient of the first and/or second electrode, so that when the assembly is heated, the first and second electrodes are even closer.

Figure 4a shows an exploded view of a second embodiment of an electrode assembly according to the invention. This assembly comprises
a first electrode 1 extended along an electrode direction d, with a first end 11 and a second end 12,
a second electrode 2 extended along the electrode direction d, with a first end 21 and a second end 22; and
a main connecting element 3 with a first through hole 31 and a second through hole 32,
a first bolt 4 and a second bolt 5

The second electrode 2 comprises a cavity 23 and the first electrode 1 comprises a protrusion 13 which matches the cavity 23 of the second electrode 2. In this embodiment, the first electrode 1 comprises a first blind hole 14 which is performed in the protrusion 13, in a direction parallel to the electrode direction d. The second electrode 2 comprises in turn a first blind hole 24 which is performed in the cavity 23, also in a direction which is parallel to the electrode direction d. The two first holes 14, 24 are arranged so as to be aligned when the first and second electrodes 1, 2 are put together.

The first electrode 1 further comprises a second hole 15 which extends in a direction which is perpendicular to the electrode direction d. This second hole 15 crosses the first blind hole 14. The second electrode 2 also comprises a second hole 25 which extends in a direction which is perpendicular to the electrode direction d. This second hole 25 crosses the first blind hole 24.

Figure 4b shows an assembled view of the electrode assembly of figure 4a.

The second end 12 of the first electrode 1 is in contact with the first end 21 of the second electrode 2. This contact is provided by the tightening of the main connecting element 3, which is performed due to the interposition of bolts 4, 5. A portion of the main connecting element 3 comprising the first through hole 31 is introduced in the first blind hole of the first electrode 1 and the rest of the main connecting element 3 comprising the second through hole 32 is introduced in the first blind hole 24 of the second electrode 2.

A first bolt 4 is introduced in the second hole 15 of the first electrode 1 and is passed through the first through hole of the main connecting element 3. A second bolt 5 is introduced in the second hole 25 of the second electrode 2 and passing through the second through hole of the main connecting element 3, thus providing a reaction force in the electrode direction d so as to keep the first electrode 1 joined to the second electrode 2. As a consequence, the two electrodes 1, 2 are coupled mechanically with an element which does not require any specific electric properties.

In this case, there is some pitch 6 located between the second end 12 of the first electrode 1 and the first end 21 of the second electrode 2. There is also pitch 6 between the main connecting element 3 and the first hole of the first electrode 1 and between the main connecting element 3 and the first hole of the second electrode 2, and also between the bolts 4, 5 and the second holes of the first and second electrodes. This pitch ensures good electric contact along all the joint, and in some cases, it may have undergone a thermal process, by resistance heating and vacuum.

The main connecting element 3 has a composite structure which contains carbon fibres and a carbon resin and has been manufactured by graphitizing the carbon resin around the carbon fibres. Bolts 4, 5 also have this internal structure. As a consequence, a very hard material is obtained, called CFC C/C, with mechanical properties which are maintained even at high temperatures. The connecting element 3 has a thermal expansion coefficient between 80% and 99% of the thermal expansion coefficient of the first and/or second electrode, so that when the assembly is heated, the first and second electrodes are even closer.

## Claims

1. Electrode assembly comprising
a first electrode (1) extended along an electrode direction (d), the first electrode (1) comprising a first end (11) and a second end (12) and further comprising a first hole (14);
a second electrode (2) extended along the electrode direction (d), the second electrode (2) comprising a first end (21) and a second end (22), wherein the second end (12) of the first electrode (1) is in contact with the first end (21) of the second electrode (2), and where the second electrode (2) further comprises a first hole (14);
a main connecting element (3), wherein a first portion of the main connecting element is introduced in the first hole (14) of the first electrode (1) and a second portion of the main connecting element is introduced in the first hole (24) of the second electrode (2), providing a reaction force in the electrode direction (d) so as to keep the first electrode (1) joined to the second electrode (2);
wherein the main connecting element (3) is made of a material with a tensile strength of at least 6 times the tensile strength of the first and second electrode;
wherein the main connecting element (3) has a cross section surface which is at least 5 times lower the cross section surface of the first and second electrodes.

2. Electrode assembly according to claim 1, further comprising a conductive resin (6), such as pitch, between the second end (12) of the first electrode (1) and the first end (21) of the second electrode (2).

3. Electrode assembly according to any of the preceding claims, further comprising a conductive resin, such as pitch (6), between the main connecting element (3) and the first hole (14, 24) of the first and/or second electrode (1, 2).

4. Electrode assembly according to any of claims 2 or 3, wherein the conductive resin (6) has undergone a thermal and vacuum process.

5. Electrode assembly according to any of claims 2 to 4, wherein the main connecting element (3) has a thermal expansion coefficient between 80% and 99% of the thermal expansion coefficient of the first and/or second electrode.

6. Electrode assembly according to any of the preceding claims, wherein the main connecting element (3) contains carbon fibres and a carbon resin and has been manufactured by graphitizing the carbon resin around the carbon fibres.

7. Electrode assembly according to any of the preceding claims, wherein the second electrode (2) comprises a cavity (23) and the first electrode (1) comprises a protrusion (13) which matches the cavity (23) of the second electrode (2).

8. Electrode assembly according to claim 7, wherein the first hole (14) of the first electrode (1) is performed in the protrusion (13) and the first hole (23) of the second electrode (2) is performed in the cavity (23).

9. Electrode assembly according to any of the preceding claims, wherein
the main connecting element (3) is threaded, and
the first hole (14) of the first electrode (1) and the first hole (24) of the second electrode (2) are also threaded so as to fit the thread of the main connecting element (3), thus providing a reaction force in the electrode direction (d) so as to keep the first electrode (1) joined to the second electrode (2).

10. Electrode assembly according to any of claims 7 or 8, wherein the first hole (14) of the first electrode (1) is located in the protrusion (13), and the first hole (24) of the second electrode (2) goes through the cavity (23), so that the main connecting element (3), the first hole (14) of the first electrode (1) and the first hole (24) of the second electrode (2) are arranged in a direction which is substantially perpendicular to the electrode direction (d).

11. Electrode assembly according to any of claims 1 to 7, wherein
the first electrode (1) further comprises a second hole (15) which extends in a direction different from the electrode direction (d) and crosses the first hole (14);
the second electrode (2) further comprises a second hole (25) which extends in a direction different from the electrode direction (d) and crosses the first hole (24);
the main connecting element (3) comprises a first through hole (31) and a second through hole (32);
the electrode assembly further comprises a first bolt (4) introduced in the second hole (15) of the first electrode (1) and passing through the first through hole (31) of the main connecting element (3);
the electrode assembly further comprises a second bolt (5) introduced in the second hole (25) of the second electrode (2) and passing through the second through hole (32) of the main connecting element (3).

12. Electrode assembly according to claim 10, wherein the second holes (15, 25) of the first and second electrodes (1, 2) extend in a direction perpendicular to the electrode direction (d).

13. Electrode assembly according to any of the preceding claims, wherein the first bolt (4) and/or the second bolt (5) are conical.
